# EUROPÄISCHE PATENTSCHRIFT

(11) **EP 2 900 789 B1**
(45) Veröffentlichungstag und Bekanntmachung des Hinweises auf die Patenterteilung: **02.12.2020**
(21) Anmeldenummer: 13766380.3
(22) Anmeldetag: 26.09.2013
(51) Int. Cl.: C09K 8/575, C04B 41/48, C04B 41/49

(54) **BINDEMITTEL SOWIE VERFAHREN FÜR DIE VERFESTIGUNG VON FORMATIONEN BEI DER ERDÖL- UND ERDGASPRODUKTION**
BINDER AND METHOD FOR CONSOLIDATING FORMATIONS IN THE CRUDE OIL AND NATURAL GAS PRODUCTION
LIANT ET PROCÉDE POUR LA SOLIDIFICATION DE FORMATIONS DANS LA PRODUCTION DE PÉTROLE ET DE GAZ NATUREL

(30) Priorität: 27.09.2012 DE 102012019150
(43) Veröffentlichungstag der Anmeldung: 05.08.2015
(73) Patentinhaber: EPG (Engineered nanoProducts Germany) AG, 64347 Griesheim (DE)
(72) Erfinder: SCHMIDT, Christian, 66119 Saarbrücken (DE); SCHMIDT, Helmut, 66130 Saarbrücken-Güdingen (DE)
(74) Vertreter: Held, Stephan
(86) Internationale Anmeldenummer: PCT/EP2013/070116
(87) Internationale Veröffentlichungsnummer: WO 2014/049078

(56) Entgegenhaltungen:
- US-A- 3 339 633
- US-A1- 2009 233 818
- US-A1- 2009 250 218
- US-A1- 2009 264 323
- US-A1- 2011 039 737
- US-A1- 2011 206 831

## Beschreibung

Die Erfindung betrifft ein Bindemittel und ein dafür eingesetztes Verfahren zur Verfestigung von Formationen.

Bindemittel zur Bindung von Schüttungen und losen Formationen sind bekannt. So beschreiben z.B. DE-A-102004004615, EP-A-06706316, WO 2007/121972, WO 2007/121975 und WO 2009/106562 Systeme, die zur Konsolidierung von Schüttungen oder losen Formationen verwendet werden. In der Regel wird dabei so vorgegangen, dass ein reaktives lösliches System in eine Schüttung oder lose Formation infiltriert und über eine Reaktion verfestigt wird. Hierfür werden verschiedene Materialien herangezogen, z.B. organische Monomere, hydrolysierbare und kondensierte Alkoxide, die über Sol-Gel-Reaktionen aktiviert werden, oder Mischungen aus beiden.

Es ist wichtig, dass die Verfestigungs- oder Härtungsreaktion erst dann startet, wenn der Infiltrationsprozess abgeschlossen ist. Ansonsten besteht die Gefahr, dass das Bindemittel z.B. Zuleitungen blockiert oder an der Oberfläche der zu infiltrierenden Formation bereits verfestigt und nicht in die Formation eindringt. Daher muss das Abbindeverhalten des Bindemittels so eingestellt werden, dass eine Verfestigung sicher erst dann beginnt, wenn die Infiltration abgeschlossen ist. In aller Regel ist es erforderlich, in einem weiteren Schritt einen Teil des infiltrierten, aber noch nicht gehärteten Bindemittels tiefer in die Formation zu drücken (Flushing), um die gewünschte oder erforderliche Porosität einzustellen.

US 3339633 beschreibt ein Verfahren zur Konsolidierung loser Erdmaterialien in einem Bohrloch, bei dem eine polymerisierende Mischung von Polyepoxiden und Polyaminen in die Formation eingeleitet wird, wobei die Formation vor der Einleitung der Mischung mit einem Fluid vorbehandelt werden kann, das ein aminfunktionelles oder epoxyfunktionelles Silan enthält.

In der Literatur wie den oben genannten Patentanmeldungen sind verschiedene Bindemittel zur Verfestigung von losen Formationen unter Aufrechterhaltung der Porosität bei der Erdöl- und Erdgasproduktion beschrieben. In WO 2009/106562 wird z.B. ein Bindemittelsystem beschrieben, das über den Sol-Gel-Prozess unter Hinzufügen von organischen Komponenten hergestellt wird und polymerisiert werden kann. Das Bindemittel wird in flüssiger Form unter Zugabe eines thermischen Initiators in die Formation gepumpt, und anschließend wird mit Stickstoff unter hohem Druck der überschüssige Binder aus den Poren vertrieben. Das in den Zwickeln hängen bleibende Material reicht aus, um nach Härtung eine feste Bindung der Sandkörner zu gewährleisten. Das Austreiben des überschüssigen Bindemittels mit Stickstoff ("Nitrogen Flushing") ist jedoch teuer, und es hat den Nachteil, dass der Stickstoff wegen seiner deutlich niedrigeren Dichte einen Rücklauf des Bindemittels an der "unteren Seite" des zu behandelnden Formationsabschnittes nicht sicher verhindern kann (Gefahr von Tunnelbildung). Ein Flushing mit Flüssigkeiten, insbesondere wasserhaltigen, wäre daher von entscheidendem Vorteil für dieses Bindemittelsystem. Entsprechende Untersuchungen haben jedoch gezeigt, dass Flushing mit salzhaltigen bei den in WO 2007/121972 A1 beschriebenen Systemen (Brine) zu keinen ausreichenden Festigkeiten der behandelten Formationen führt.

Die Aufgabe bestand daher darin, ein Bindemittel und ein Verfahren zur Verfestigung von geologischen Formationen bereitzustellen, die es ermöglichen, dass man das infiltrierte Bindemittel zum Teil mit einer wässrigen Flüssigkeit wieder austreiben kann, um die Permeabilität zu verbessern, und dennoch eine ausreichende Festigung der Formation erreicht wird.

Es wurde nun überraschend gefunden, dass die Zugabe von bestimmten Komponenten, die über die Eigenschaft verfügen, sich mit dem Netzwerk eines Bindemittels auf Basis des in WO 2009/106562 beschriebenen Bindemittels auf der einen Seite und mit der Gesteinsoberfläche auf der anderen Seite zu verbinden, eine Lösung für dieses Problem darstellen. Insbesondere kommen funktionelle Silane mit hydrophilen organischen Gruppen infrage, mit denen die Festigkeiten deutlich verbessert und Festigkeiten ähnlich wie beim Spülen mit Stickstoff (Flushing) erhalten werden. Bei den Silanen kann es sich z.B. um Glycidyloxypropyltrialkoxysilane, deren Epoxygruppen sich unter den Anwendungsbedingungen zu Diol-Gruppen öffnen, oder Mono-, Di- oder Triaminopropyltrialkoxysilane handeln, wobei selbstverständlich auch andere oder mehrere funktionelle Gruppen infrage kommen.

Durch diese Modifikation des Bindemittels ist es möglich, im Bindemittel eine mit der organischen Phase nicht oder schwer mischbare neue Phase zu bilden, mithilfe derer es gelingt, überschüssiges Bindemittel aus der Formation mit einer salzhaltigen Flüssigkeit auszutreiben, so dass die gewünschte Porosität erhalten bleibt und dennoch eine ausreichende Festigkeit erzielt werden kann. Ohne sich an eine Theorie binden zu wollen, wird davon ausgegangen, dass der an sich mit Wasser nicht mischbare Binder nach Zusatz dieser Silane mit Wasser zum Teil klebrige Ausscheidungen bzw. hochviskose Emulsionen bilden, die besonders gut an der Oberfläche der Formationen, bei denen es sich in der Regel um silicatische Formationen handelt, ohne auf diese beschränkt zu sein, haften bleiben, und somit genügend Material in den Zwickeln verbleibt, um eine ausreichende Festigkeit zu gewährleisten. Mit diesem Zusatz ist nun das so genannte Brine-Flushing möglich, das eine Reihe von Vorteilen in der Anwendung ergibt. Durch diese Modifikation kann der Binder breit in der Öl- und Gasindustrie vorteilhaft verwendet werden.

Die Erfindung betrifft Bindemittel zur Verfestigung von geologischen Formationen, wobei das Bindemittel wie in Anspruch 1 definiert ist.

Ferner betrifft die Erfindung ein Verfahren zur Verfestigung einer geologischen Formation, bei dem ein Bindemittel in die Formation infiltriert wird, ein Teil des infiltrierten Bindemittels durch Spülen mit einer Flüssigkeit wieder ausgetrieben wird, und das in der Formation verbleibende Bindemittel gehärtet wird, wobei das Bindemittel wie in Anspruch 1 definiert ist.

Das Bindemittel umfasst die üblichen Komponenten A und B und zusätzlich eine Komponente C, d.h. das Silan mit hydrophiler Gruppe, das mit den anderen beiden Komponenten eine dritte Phase ausbilden kann, die deutlich klebriger ist und eine höhere Viskosität aufweist. Mit der Erfindung ist es möglich, ein Brine Flushing bei der Verfestigung von Formationen einzusetzen, so dass auf einfache und relativ kostengünstige Weise die gewünschte Porosität der Formation und gleichzeitig eine hohe Festigkeit erreicht werden. Im folgenden wird die Erfindung beschrieben. Polymerisation schließt hier sofern nicht näher spezifiziert allgemein Polymerisation, Polykondensation und Polyaddition ein.

Bei der zu verfestigenden geologischen Formation kann es sich um irgendeine Formation der Erdkruste handeln. Die Formation kann unterschiedliche Substrate enthalten, z.B. Gesteinsschichten verschiedener Mineralität, Erdreich, Sand, Tone, Erze, Kohle oder Mischungen davon. Die geologische Formation kann sich auch unter dem Meer oder unter einem See befinden. Sie kann auch künstliche Formationen wie Müllhalden umfassen. Die Verfestigung kann z.B. notwendig sein, weil die Formation lose oder lockere Bereiche umfasst oder daraus besteht, z.B. Sand oder anderes ungebundenes Material wie Gestein. Die Verfestigung kann zweckdienlich sein, um Bohrungen durchzuführen oder gasförmige oder flüssige Medien durch die Formation zu leiten.

Vorzugsweise enthält die Formation oder eine darunterliegende Formation Erdöl oder Erdgas. Solche Formationen bzw. Lagerstätten sind dem Fachmann bekannt. Es handelt sich bevorzugt um öl-, gas- oder wasserführende geologische Formationen. Häufig sind es sandhaltige Formationen.

Das erfindungsgemäße Bindemittel wird zur Festigung der geologischen Formation in die Formation infiltriert. Dem Fachmann sind dafür geeignete Techniken vertraut. Die Infiltration kann z.B. durch Einpumpen des Bindemittels in die Formation erfolgen.

Der Fachmann kann den geeigneten Druck und die für den jeweiligen Zweck notwendige Menge ohne weiteres bestimmen. Der Druck hängt z.B. von der eingestellten Viskosität des Bindemittels und natürlich insbesondere von der Beschaffenheit und des im Injektionsbereich herrschenden Druckes der Formation ab. Hierfür geeignete Hochdruckpumpen oder Injektionspumpen sind kommerziell erhältlich. Das Bindemittel kann auch z.B. über bereits vorhandene Bohrungen in die Formation infiltriert werden. Das Bindemittel kann an einer oder an mehreren Stellen in die geologische Formation infiltriert werden.

Die Infiltration des erfindungsgemäßen Bindemittels in die Formation führt zu einer Ausfüllung von darin befindlichen Zwischenräumen oder Kanälen, wodurch sich eine mehr oder weniger starke Abdichtung ergibt. Wenn man das einmal infiltrierte Bindemittel danach direkt aushärten lässt, erhält man zwar die gewünschte Festigkeit, allerdings kann dies auch zu einem teilweisen oder vollständigen Verlust der Permeabilität der Formation führen. Dies würde die Produktion von Erdöl oder Erdgas erschweren oder sogar unmöglich machen.

Erfindungsgemäß wird daher nach der Infiltration des Bindemittels und vor dessen Härtung die geologische Formation mit einer Flüssigkeit gespült, um einen Teil des infiltrierten Bindemittels wieder aus der Formation auszutreiben. Auf diese Weise bleibt in der Regel ein großer Teil der ursprünglichen Permeabilität oder Porosität der Formation erhalten. Das Spülen (Flushing) von geologischen Formationen mit gasförmigen oder flüssigen Medien ist allgemein bekannt.

Bei der zum Spülen des erfindungsgemäßen Bindemittels verwendeten Flüssigkeit handelt es sich um wässrige Lösungen. Die wässrige Flüssigkeit bzw. das Wasser kann Additive enthalten, z.B. Tenside, Emulgatoren und/oder gelöste Stoffe wie Salze.

Besonders bevorzugt handelt es sich um salzhaltige wässrige Flüssigkeiten und insbesondere um Salzwasser ("Brine"). Es können alle in der Flüssigkeit löslichen Salze oder Mischungen von Salzen verwendet werden. Geeignete Salze sind z.B. NaCl und KCl. Besonders geeignet sind zum Beispiel Kochsalzlösungen, Meerwasser oder KCl-haltiges Wasser. Der Salzgehalt in der Flüssigkeit kann in breiten Bereichen schwanken, z.B. mindestens 0,01 und bevorzugt mindestens 0,1 Gew.% Salz und nicht mehr als 10 Gew.-% und bevorzugt nicht mehr als 6 Gew.% Salz. Häufig ist ein Salzgehalt zweckmäßig, der in etwa dem Salzgehalt im Meerwasser entspricht. Meerwasser hat einen durchschnittlichen Salzgehalt von etwa 3,5 Gew.-%. Salzwasser mit einem Salzgehalt im Bereich von 2 bis 5 Gew.-% ist daher bevorzugt, wobei als Salz bevorzugt NaCl oder KCl verwendet wird.

Die Spülflüssigkeit kann auf dieselbe Weise wie das Bindemittel in die geologische Formation eingedrückt werden, z.B. durch Hochdruckpumpen oder Injektionspumpen, um die Spülung zu erreichen. Dabei können dieselben Pumpen verwendet werden, die auch für die Infiltration des Bindemittels eingesetzt wurden, wobei die Pumpen gegebenenfalls vorher zu reinigen sind. Die Flüssigkeit kann auch über eine bereits vorhandene Bohrung eingeführt werden. Die Flüssigkeit kann an einer oder mehreren Stellen in die Formation eingedrückt werden. Diese Stellen können mit denen, in denen das Bindemittel infiltriert wurde, übereinstimmen oder nicht.

Durch das Spülen mit der Flüssigkeit wird ein Teil des infiltrierten Bindemittels, das flüssig und noch nicht gehärtet ist, aus den Poren, Kanälen oder Zwischenräumen, nicht aber aus den Zwickeln z.B. zwischen den Körnern der geologischen Formation ausgetrieben, wodurch die Porosität oder Permeabilität der Formation in der gewünschten Weise aufrecht erhalten bzw. eingestellt und gleichzeitig eine hohe Festigkeit erzielt werden kann. Das Spülen erfolgt insbesondere vor dem Härten des Bindemittels über einen bestimmten Zeitraum.

Parameter für das Spülen, wie Dauer, Zeitpunkt, Menge oder Durchflussgeschwindigkeit der flüssigen Phase, können vom Fachmann ohne weiteres in geeigneter Weise gewählt werden, um die gewünschte Porosität einzustellen. Durch Durchpumpen des flüssigen Mediums werden Porenvolumina in der Formation freigespült. Es können auch Reaktionsprodukte aus dem Bindemittel abgeführt werden.

Während bei dem verwendeten Bindemittel nach WO 2007/121972 A1 bei Stickstoffspülung ein ausreichender Anteil des Feststoffgehalts des Bindemittels in der Formation bleibt, um dieser eine ausreichende Festigkeit zu gewährleisten, hat sich herausgestellt, dass dies bei dem so genannten Brine Flushing, unabhängig von Art der Formation bzw. des Sandes nicht möglich ist. Die erzielten Druckfestigkeiten der hergestellten Formkörper lagen in diesen Fällen unter 1 MPa, was in der Praxis keinesfalls zu einer ausreichenden Verfestigung ausreicht. Ursache für die niedrige Druckfestigkeit ist das fast vollständige Ausspülen des Bindemittels nach WO 2007/121972 A1 durch die wässrige Brine-Phase.

Durch die Zugabe von hydrophilen Silanen, die mindestens eine nicht hydrolysierbare Gruppe mit mindestens einer hydrophilen Gruppe aufweisen, zu den beiden anderen Komponenten A und B entsteht eine zusätzliche Phase oder emulgierte Phase, die sich in ihrer Viskosität deutlich von dem ursprünglichen Bindemittel unterscheidet und die zu Gesteinsoberflächen eine außerordentlich hohe Haftung aufweist. Ohne sich an eine Theorie binden zu wollen, wird davon ausgegangen, dass diese Phase einen wesentlich höheren Verbleib von polymerisierbaren Bindemittelanteilen in der Formation verursacht, und dass damit nach dem Aushärten die gewünschte Festigkeit, z.B. zwischen 5 und 10 MPa, erhalten wird.

Durch die Spülung wird der Teil des infiltrierten erfindungsgemäßen Bindemittels, der sich in den Poren oder Kanälen befindet, wieder ausgetrieben. Die Menge des ausgetriebenen Bindemittels kann durch die oben genannten Parameter und gegebenenfalls durch Einstellung des Bindemittels, z.B. bezüglich Viskosität oder Zusammensetzung, gesteuert werden.

Die Menge des auszutreibenden Bindemittels kann je nach vorliegender Formation, verwendetem Bindemittel und gewünschter Permeabilität variieren. Im allgemeinen sollten nach der Spülung mindestens 1, bevorzugt mindestens 5 und besonders bevorzugt mindestens 15 Gew.-% an Feststoff aus dem infiltrierten Bindemittels nach der Spülung in der Formation verbleiben. Entsprechend ist es bevorzugt, wenn mindestens 40, bevorzugt mindestens 60 und besonders bevorzugt mindestens 70 Gew.-% des infiltrierten Bindemittels durch die Spülung wieder aus der Formation ausgetrieben werden. Geeignete Mengen an in der Formation verbleibendem Bindemittel sind z.B. 5 bis 45 Gew.-% oder 10 bis 40 Gew.-% des infiltrierten Bindemittels.

Die Härtung des Bindemittels nach dem Spülen mit Flüssigkeit wird bevorzugt über thermische Radikalstarter durchgeführt, um die Polymerisation der im Bindemittel enthaltenen polymerisierbaren Gruppen, vorzugsweise organischen Doppelbindungen, zu starten. Bevorzugt werden hier Peroxide oder Azoverbindungen. Die Starttemperatur der Radikalstarter ist dabei so eingestellt, dass sie bei der Temperatur der Formation aktiv werden. Zusätzlich härtet das erfindungsgemäße Bindemittel durch die Kondensation der bei der Herstellung des Bindemittels synthetisierten vernetzbaren SiOH-Gruppen oder Metall-OH-Gruppen, die eine weitere Vernetzung unter Bildung eines anorganischen Netzwerkes bewirken.

Das erfindungsgemäße neue Bindemittel eignet sich auch insbesondere für den Einsatz bei geologischen Formationen, die Wasser führen. In relativ großen Tiefen können etwa hydrothermale Bedingungen vorliegen, d.h. Temperaturen über der kritischen Temperatur und Drücken über dem kritischen Druck, siehe z.B. Röhm, Lexikon der Chemie. Ein besonderer Vorteil des erfindungsgemäßen Bindemittels besteht darin, dass es auch unter solchen Hydrothermalbedingungen angewendet werden kann.

Die Abbindung (Härtung) erfolgt für solche Anwendungen bevorzugt unter erhöhter Temperatur und erhöhtem Druck oder Normaldruck, bezogen auf die Normalbedingungen, d.h. der Druck ist gleich oder größer als 1 bar und die Temperatur ist höher als 20 °C. Das Bindemittel kann entsprechend den gedogischen Rahmenbedingungen der Formation, in der es eingesetzt wird, in der Regel Temperaturen von über 25°C oder über 30°C und/oder Drücken von 1bar oder mehr, z.B. mehr als 1,2 bar oder 2 bar oder sogar mehr als 40 bar gehärtet werden.

Die Härtung kann in Abhängigkeit von den chemischen Eigenschaften der organischen und anorganischen Bestandteile des Bindemittels über anorganische Kondensations- und über Polymerisationsreaktionen der eingesetzten organischen polymerisierbaren oder polykondensierbaren Monomere oder Oligomere bewirkt werden, wobei vor, nach oder parallel zu der Polymerisation der organischen Monomere oder Oligomere eine weitere Kondensation der anorganischen Bestandteile des Bindemittels stattfindet, die ebenfalls zur Härtung beiträgt.

Das erfindungsgemäße Verfahren dient zur Verfestigung von geologischen Formationen. Insbesondere kann das Bindemittel zur Verfestigung von geologischen Formationen für die Öl- und Gasförderung eingesetzt werden. Es ermöglicht die Verfestigung von Formationen unter Aufrechterhaltung von Porosität und Permeabilität, wodurch die Ausbeutung von Öl- und Gasquellen wesentlich erleichtert werden kann.

Im Folgenden werden das erfindungsgemäße Bindemittel und seine Herstellung erläutert. Das nachstehend erläuterte Bindemittel kann im erfindungsgemäßen Verfahren eingesetzt werden. Bei dem Bindemittel handelt es sich um ein öl-, heißwasser- und temperaturbeständiges Bindemittel.

Das erfindungsgemäße Bindemittel umfasst eine Mischung aus A) einem Heterokondensat, erhältlich durch Hydrolyse und Kondensation von mindestens einer hydrolysierbaren Siliciumverbindung und mindestens einer Metall-, Phosphor- oder Borverbindung, wobei das Metall ausgewählt ist aus Al, Ge, Sn, Pb, Ti, Mg, Li, V, Nb, Ta, Zr und Hf, B) mindestens einem organischen polymerisierbaren oder polykondensierbaren Monomer oder Oligomer und C) mindestens einer hydrolysierbaren Siliciumverbindung, die einen nicht hydrolysierbaren Rest mit mindestens einer hydrophilen Gruppe umfasst. Bindemittel, die die Komponenten A) und B) enthalten, sind bereits bekannt. Durch die Zugabe der Komponente C) konnte aber überraschenderweise eine deutliche Verbesserung bei der Verfestigung von Formationen in Verfahren, in denen eine Spülflüssigkeit zum Austreiben von infiltriertem Bindemittel eingesetzt wurde, um eine geeignete Permeabilität der Formation zu erreichen, erzielt werden.

Das erfindungsgemäße Bindemittel umfasst ein Heterokondensat, das durch Hydrolyse und Kondensation von mindestens einer hydrolysierbaren Siliciumverbindung und mindestens einer Metall-, Phosphor- oder Borverbindung erhältlich ist. Es können ein, zwei oder mehr hydrolysierbare Siliciumverbindungen und/oder ein, zwei oder mehr Metall-, Phosphor- oder Borverbindungen eingesetzt werden. Die mindestens eine hydrolysierbare Siliciumverbindung wird weiter unten erläutert.

Als weitere Komponente für das Heterokondensat wird eine zusätzliche Verbindung, insbesondere eine hydrolysierbare Verbindung, von einem Element ausgewählt aus P, B oder einem Metall ausgewählt aus Al, Ge, Sn, Pb, Ti, Mg, Li, V, Nb, Ta, Zr und Hf eingesetzt. Durch diese Komponente wird die Korrosionsresistenz und Hydrolysebeständigkeit des gehärteten Bindemittels erhöht. Hydrolysierbare Verbindungen von Titan, Aluminium, Zirconium, Zinn und Bor sind besonders bevorzugt, wobei Titanverbindungen am meisten bevorzugt sind. Die Verbindungen können einzeln oder als Mischung aus zwei oder mehr dieser Elemente eingesetzt werden.

Bei der Metall-, Phosphor- oder Borverbindung kann es sich um eine Verbindung der Formel (II) handeln

MXₐ (II)

worin M P, B, Al, Ge, Sn, Pb, Ti, Mg, Li, V, Nb, Ta, Zr und Hf ist, X gleich oder verschieden ist und hydrolytisch abspaltbare Gruppen oder Hydroxygruppen darstellt und a der Wertigkeit des Elements entspricht, wobei bei Einsatz von Komplexliganden a auch größer oder bei mehrzähnigen Liganden auch kleiner als die Wertigkeit von M sein kann, oder um entsprechende lösliche Oxide oder Hydroxide. Die Wertigkeit von M ist in der Regel 1, 2, 3, 4 oder 5. Gegebenfalls umfasst die Verbindung der Formel (II) auch ein Gegenion. Beispiele für X sind wie vorstehend für Formel (I) definiert, einschließlich der bevorzugten Beispiele, wobei zwei Gruppen X durch eine Oxogruppe ersetzt sein können. X kann neben den in Formel (I) angegeben Substituenten auch Sulfat, Nitrat, ein Komplexbildner, wie z.B. ein β-Diketon, eine gesättigte oder ungesättigte Carbonsäure oder das Salz davon, eine anorganische Säure oder ein Salz davon und ein Aminoalkohol sein. Die Metall-, Phosphor- oder Borverbindung ist insbesondere eine hydrolysierbare Verbindung.

Bei der Phosphorverbindung kann es sich z.B. um Phosphoroxide oder Phosphate handeln. Bevorzugt werden Metall- oder Boralkoxide eingesetzt.

In einer bevorzugten Ausführungsform werden Metall-, Phosphor- oder Borverbindungen, die Komplexliganden umfassen, oder eine Kombination von Metall-, Phosphor- oder Borverbindungen und einem Komplexliganden, eingesetzt. Ohne sich an eine Theorie binden zu wollen, wird angenommen, dass bei Einsatz einer Kombination von Metall-, Phosphor- oder Borverbindungen und einem Komplexliganden zur Herstellung des Hydrolysats und Kondensats sich in situ eine Anbindung des Komplexliganden an das Zentralatom der eingesetzten Metall-, Phosphor- oder Borverbindung ergeben kann. Geeignete Kombinationen kann der Fachmann ohne weiteres auswählen. Die Kombination kann z.B. durch einfaches Mischen der beiden Komponenten erhalten werden. Beispiele für Komplexliganden sind Acetylacetonat, Ethylacetoacetat, Dialkyldithiophosphat, Dodecylbenzolsulfonsäure, Ölsäure und Palmitinsäure.

In einer Ausführungsform kann der Komplexligand einen polymerisierbaren Rest umfassen. Die polymerisierbare organische Gruppe kann jede übliche, dem Fachmann bekannte Gruppe sein, die mit sich selbst oder einer oder mehreren anderen korrespondierenden polymerisierbaren Gruppen eine Polymerisation eingehen kann. Polymerisation schließt hier in der Beschreibung neben der bevorzugten radikalischen Polymerisation auch ganz allgemein Polykondensation und Polyaddition ein.

Als Metallverbindungen sind die Alkoxide von Ti, Zr und Al, insbesondere von Ti, bevorzugt. Geeignete Metall-, Phosphor- oder Borverbindungen einschließlich solcher mit Komplexbildner sind z.B. Ti(OC₂H₅)₄, Ti(O-n- oder i-C₃H₇)₄, Ti(OC₄H₉)₄, TiCl₄, Ti(O-iC₃H₇)₂Cl₂, Hexafluorotitansäure, TiOSO₄, Diisopropoxybis(ethylaceto-acetato)titanat, Poly(dibutyltitanat), Tetrakis(diethylamino)titan, Titan-2-ethylhexoxid, Titanbis(triethanolamin)diisopropoxid, Titanchloridtriisopropoxid, Al(OC₂H₅)₃, Al(O-sek.-C₄H₉)₃, AlCl(OH)₂, Al(NO₃)₃, Zr(OC₃H₇)₄, Zirconium-2-ethylhexoxid, BCl₃, B(OCH₃)₃ und SnCl₄, Zr(OC₃H₇)₂(OOC(CH₃)=CH₂)₂, Titanacetylacetonat, Titan-oxidbis(pentandionat), Ti(OC₃H₇)₃(OOC(CH₃)=CH₂) und Ti(OC₂H₄)₃(Allylacetoacetat), Phosphoroxide oder Phosphate. Von den Metallverbindungen sind Ti(O-iC₃H₇)₄, Ti(OC₄H₉)₄, Titanbis(triethanolamin)diisopropoxid und Ti(OC₃H₇)₃(OOC(CH₃)=CH₂) und weitere Komplexbildner umfassende Ti-Verbindungen besonders bevorzugt. Wie gesagt kann alternativ eine Kombination von der Metall-, Phosphor- oder Borverbindung mit dem gewünschten Komplexbildner eingesetzt werden.

Es handelt sich bei den hydroysierbaren Siliciumverbindungen um Verbindungen bzw. Silane der allgemeinen Formel (III)

RₙSiX₄₋ₙ (III)

worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat.

Bei den Silanen der Formel (III) umfasst mindestens ein Rest R, und bevorzugt der einzige Rest R (n=1), eine polymerisierbare Gruppe und eine zweiwertige Brückengruppe zur Anbindung an das Si. Der Substituent X und, falls vorhanden, andere Reste R der Formel (III) sind weiter unten definiert.

Die polymerisierbare Gruppe ist ausgewählt aus Epoxid, Hydroxy, Amino, Monoalkylamino, Dialkylamino, gegebenenfalls substituiertes Anilino, Amid, Carboxy, Alkenyl, Alkinyl, Acryloyl, Acryloyloxy, Methacryloyl, Methacryloyloxy, Mercapto, Cyano, Isocyanato, Aldehyd, Keto, Alkylcarbonyl, Säureanhydrid und Phosphorsäure. Die polymerisierbare Gruppe ist über zweiwertige Brückengruppen, insbesondere Alkylen- oder Arylen-Brückengruppen, die durch Sauerstoff- oder -NH-Gruppen unterbrochen sein können, an das Siliciumatom gebunden. Die Brückengruppen enthalten z. B. 1 bis 6 Kohlenstoffatome. Die genannten zweiwertigen Brückengruppen leiten sich z. B. von den unten genannten einwertigen Alkyl- oder Arylresten ab. Bevorzugt ist die Brückengruppe eine Alkylen-, insbesondere eine Propylengruppe.

Die hydrolytisch abspaltbaren bzw. hydrolysierbaren Gruppen X sind ausgewählt aus Wasserstoff, Halogen (F, Cl, Br oder I, insbesondere Cl oder Br), Alkoxy (z. B. C₁₋₆-Alkoxy, wie z. B. Methoxy, Ethoxy, n-Propoxy, i-Propoxy und n-, i-, sek.- oder tert.-Butoxy), Isocyanato, Aryloxy (vorzugsweise C₆₋₁₀-Aryloxy, wie z. B. Phenoxy), Alkaryloxy, z.B. Benzoyloxy, Acyloxy (z. B. C₁₋₆-Acyloxy, vorzugsweise C₁₋₄-Acyloxy, wie z. B. Acetoxy oder Propionyloxy) und Alkylcarbonyl (z. B. C₂₋₇-Alkylcarbonyl wie Acetyl), NH₂, mit Alkyl, Aryl und/oder Aralkyl mono- oder disub¬stituiertes Amino, wobei Beispiele für die Alkyl-, Aryl und/oder Aralkylreste die nachstehend für R angegebenen sind, Amido wie Benzamido oder Aldoxim- oder Ketoximgruppen, wobei zwei oder drei Gruppen X auch miteinander verbunden sein können, um Si-Polyolkomplexe mit Glycol, Glycerin oder Brenzcatechin zu bilden. Die genannten Gruppen können gegebenenfalls Substituenten, wie Halogen, Hydroxy oder Alkoxy enthalten.

Bevorzugte hydrolysierbare Reste X sind Halogen, Alkoxygruppen und Acyloxy¬gruppen. Besonders bevorzugte hydrolysierbare Reste sind Alkoxygruppen, bevor¬zugter C₁₋₄-Alkoxygruppen, insbesondere Methoxy und Ethoxy.

Die hydrolytisch nicht abspaltbaren anderen Reste R, falls vorhanden, sind ausgewählt aus Alkyl, z. B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl, Ary!, insbesondere C₆₋₁₀-Aryl, wie Phenyl und Naphthyl, und ent¬sprechende Aralkyl- und Alkarylgruppen, wie Tolyl und Benzyl, und cyclische C₃-C₁₂-Alkylgruppen, wie Cyclopropyl, Cyclopentyl und Cyclohexyl. Bevorzugte Reste R sind Alkylgruppen mit vorzugsweise 1 bis 4 Kohlenstoffatomen, insbesondere Methyl und Ethyl, sowie Arylreste wie Phenyl.

Konkrete Beispiele sind Vinylsilane, Acrylsilane und Methacrylsilane, wie Vinyltriethoxysilan, (Meth)acryloyloxyalkyltrimethoxysilan und (Meth)acryloyloxyalkyltriethoxysilan, z.B. Methacryloyloxypropyltrimethoxysilan (MPTS).

Die hydrolysierbaren Siliciumverbindungen werden auch als Silane bezeichnet. Silane und nachstehend beschriebene Polysiloxane lassen sich nach bekannten Methoden herstellen; vgl. W. Noll, "Chemie und Technologie der Silicone", Verlag Chemie GmbH, Weinheim/Bergstraße (1968).

Das Molverhältnis von Si-Atomen aller eingesetzten Si-Verbindungen zu den Metall-Phosphor- und Boratomen aller eingesetzten vorstehend genannter Metall-, Phosphor- und Borverbindungen im Heterokondensat kann in breiten Bereichen gewählt werden, beträgt aber bevorzugt 10:1 bis 1:3 und bevorzugter 5:1 bis 1:1.

Neben den genannten Metall-, Phosphor- oder Borverbindungen können zusätzliche Metallverbindungen eingesetzt werden. Beispiele für derartige Metallverbindungen sind Verbindungen von anderen glas- oder keramikbildenden Metallen, insbesondere Verbindungen mindestens eines Metalls aus der Hauptgruppe III und V und/oder der Nebengruppen II bis VIII des Periodensystems der Elemente. Es handelt sich z.B. um hydrolysierbare Verbindungen von Mn, Cr, Fe, Ni, Ga, In, Sc, Y und Zn. Ebenfalls einsetzbar sind z.B. hydrolysierbare Verbindungen von Elementen der Hauptgruppen I und II des Periodensystems z. B. Na, K und Ca. Auch hydrolysierbare Verbindungen der Lanthanoiden wie Ce können verwendet werden. Es handelt sich dabei z.B. um Metallverbindungen der allgemeinen Formel M'Xₐ, worin M' ein Metall der Hauptgruppen I, II, III oder V oder der Nebengruppen II bis VIII des Periodensystems der Elemente oder ein Lanthanoid ist, X und a wie in Formel (II) definiert sind.

Zur Herstellung des Heterokondensats wird die mindestens eine Siliciumverbindung und die mindestens eine Metall-, Phosphor oder Borverbindung, durch Vermischung mit Wasser einer Hydrolyse unterworfen, wobei die Reaktion bevorzugt nach dem nachstehend diskutierten CCC-Verfahren durchgeführt wird, um ein homogenes Heterokondensat aus Si-Komponenten und Metall-, Phosphor- oder Borkomponenten zu erhalten. Die Hydrolyse erfolgt insbesondere nach dem Sol-Gel-Verfahren. Beim Sol-Gel-Verfahren werden allgemein die hydrolysierbaren Verbindungen mit Wasser, gegebenenfalls in Gegenwart von sauren oder basischen Katalysatoren, hydrolysiert. Vorzugsweise erfolgt die Hydrolyse in Gegenwart saurer Katalysatoren, z. B. Salzsäure oder Phosphorsäure, vorzugsweise bei einem pH-Wert von 1 bis 3. Das sich bildende Sol kann durch geeignete Parameter, z. B. Kondensationsgrad, Lösungsmittel oder pH-Wert, auf die für das Bindemittel gewünschte Viskosität eingestellt werden. Sol-Gel-Prozesse sind seit langem bekannt. Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse können stöchiometrische Wassermengen, aber auch geringere oder größere Mengen verwendet werden, z.B. bis zu 1,2 Mol Wasser pro Mol der vorhandenen hydrolysierbaren Gruppen. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9 Mol, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,45 bis 0,65 Mol Wasser, pro Mol der vorhandenen hydrolysierbaren Gruppen erzielt. Als vorhandene hydrolysierbare Gruppen werden hier alle hydrolysierbaren Gruppen der insgesamt zugegebenen Ausgangsverbindungen verstanden, also einschließlich der gegebenenfalls erst später zugegebenen Metall-, Phosphor- oder Borverbindungen.

Hydrolysierbare Siliciumverbindungen und Metall-, Phosphor oder Borverbindungen weisen im Hinblick auf Hydrolyse und Kondensation unterschiedliche Reaktivitäten auf. Ferner sind die Hydrolyseprodukte recht instabil, so dass sich nach erfolgter Hydrolyse Kondensationsreaktionen anschließen. Werden z.B. hydrolysierbare Siliciumverbindungen und Titanverbindungen gleichzeitig hydrolysiert, so werden separate TiO₂-Partikel gebildet, so dass ein Großteil des Ti nicht molekular in das Netzwerk des sich bildenden Kondensats eingebaut wird.

In einer bevorzugten Ausführungsform erfolgt die Hydrolyse daher in zwei oder mehr Stufen nach dem sogenannten chemisch gesteuerten Kondensationsverfahren (CCC-Verfahren, chemically controlled condensation process). Hierbei wird berücksichtigt, dass die eingesetzten hydrolysierbaren Verbindungen unterschiedliche Hydrolysereaktivitäten aufweisen. Wie vorstehend ausgeführt besitzen insbesondere die Metall-, Phosphor- oder Borverbindungen in der Regel eine höhere Hydrolysereaktivität als hydrolysierbare Silane.

Nach dem bevorzugten zwei- oder mehrstufigen Hydrolyseverfahren werden zuerst eine oder mehrere hydrolysierbare Verbindungen mit niedrigerer Hydrolysereaktivität mit im allgemeinen der Menge an Wasser, die für die Bildung des Hydrolysats oder Kondensats vorgesehen ist, gemischt, um diese Verbindungen vorzuhydrolysieren, und dann werden zu dieser Mischungen eine oder mehrere hydrolysierbare Verbindungen mit höherer Hydrolysereaktivität zugesetzt. Dies kann bei Bedarf noch weiter ausdifferenziert werden, indem drei oder mehr Stufen ausführt werden.

Bei der Herstellung des Heterokondensats in zwei oder mehr Stufen erfolgt zunächst eine Hydrolyse der Silane durch Mischung von hydrolysierbaren Silanen und Wasser, gegebenenfalls in Anwesenheit eines Katalysators. Durch die Hydrolyse wird das zugegebene freie Wasser verbraucht. Die hydrolysierten Silane können anschließend Kondensationsreaktionen eingehen, bei denen wieder Wasser freigesetzt wird. Auch wenn Kondensationsreaktionen gegebenenfalls schon einsetzen können, bevor die Silane vollständig hydrolysiert worden sind, sinkt der Gehalt an freiem Wasser in der Mischung nach Zugabe des Wassers mit der Zeit auf ein Minimum und steigt dann aufgrund von Kondensationsreaktionen wieder an. Da, bezogen auf die hydrolysierbaren Gruppen der hydrolysierbaren Silane, bevorzugt höchstens eine stöchiometrische Menge und bevorzugter eine unterstöchiometrische Menge Wasser zugesetzt wird, wird das eingesetzte Wasser zunächst vollständig oder im Wesentlichen vollständig verbraucht, ehe durch die Kondensation wieder Wasser freigesetzt wird, d.h. im Minimum ist praktisch kein Wasser oder nur wenig Wasser in der Mischung vorhanden.

Die Metall-, Phosphor- oder Borverbindung wird bevorzugt zu der Mischung aus der hydrolysierbaren Siliciumverbindung und Wasser gegeben, wenn das Wasser in der Reaktionsmischung durch die Hydrolyse im Wesentlichen verbraucht worden ist, d.h. zum Zeitpunkt der Zugabe der Metall-, Phosphor- oder Borverbindung ist in der Reaktionsmischung kein Wasser oder nur eine geringe Menge Wasser vorhanden, bevorzugt weniger als 15%, bevorzugter weniger als 10% und besonders bevorzugt weniger als 5% der Wassermenge, die zur Hydrolyse zugesetzt wurde. Die Metall-, Phosphor- oder Borverbindung wird auch insbesondere zugegeben, bevor durch die Kondensationsreaktionen sich wieder ein höherer Gehalt an freiem Wasser in der Reaktionsmischung bildet.

Dem Fachmann sind die Verfahren zur Bestimmung des Wassergehalts in einer Mischung vertraut. Beispiele für geeignete Verfahren sind die Karl-Fischer-Titration oder IR-Spektroskopie. Die geeignete Zeitspanne zur Zugabe der Metall- oder Borverbindung kann auch einfach empirisch z.B. im Rahmen von Vorversuchen bestimmt werden, bei denen die Metall-, Phosphor- oder Borverbindung zu bestimmten Zeitpunkten zur Mischung hydrolysierbare Siliciumverbindung/Wasser zugegeben wird und anschließend z.B. durch Photonenkorrelationsspektroskopie (PCS) oder Dynamische Lichtstreuung geprüft wird, ob sich Partikel bilden, bei denen es sich um die Oxide der Metall- oder Borverbindung handelt, etwa TiO₂-Teilchen. Sofern sich solche Partikel bilden, ist die Zugabe zu früh oder zu spät erfolgt. Die geeignete Zeitspanne zur Zugabe, in der diese Teilchen nicht gebildet werden, kann auf diese Weise leicht bestimmt werden.

Eine andere, leicht durchführbare Methode zur Feststellung des Zugabezeitpunkts ist die Ermittlung des Klarpunkts. Vor dem Einsetzen der Hydrolyse ist die Silanphase mit Wasser nicht mischbar. Bei Zugabe von Wasser wird dies durch eine Trübung der gerührten Reaktionsmischung angezeigt. Erst durch die Bildung von Alkohol und =SiOH bei gleichzeitigem Verbrauch von Wasser wird das System einphasig und zeigt den weitgehenden Verbrauch von H₂O an. Am Klarpunkt gehen diese beiden Phasen ineinander über und die Reaktionsmischung klart sich auf. Da der Klarpunkt in der Regel ungefähr dann auftritt, wenn das zugesetzte Wasser im Wesentlichen verbraucht worden ist bzw. der Wassergehalt minimal ist, kann die Metall-, Phosphor- oder Borverbindung zugegeben werden, wenn der Klarpunkt erreicht worden ist. Dies schließt eine Zugabe kurz vor oder nach dem Klarpunkt natürlich ein.

Das erhaltene Heterokondensat kann wie es ist verwendet werden. Es kann durch geeignete Parameter, z. B. Kondensationsgrad, Lösungsmittel oder pH-Wert, auf die für das Bindemittel gewünschte Viskosität eingestellt werden. In einer bevorzugten Ausführungsform lässt man das Bindemittel durch einfaches Stehenlassen reifen bzw. altern, z.B. für mindestens 1 h und bevorzugt mindestens 5 h. Danach kann es für die gedachte Anwendung für das Bindemittel eingesetzt werden.

Es wurde auch überraschenderweise festgestellt, dass ein noch homogeneres Heterokondensat erhalten werden kann, wenn die Ausgangsmaterialien unverdünnt, d.h. ohne Lösungsmittel, eingesetzt werden. Die Hydrolyse und Kondensation werden daher bevorzugt ohne Zugabe von Lösungsmittel durchgeführt. Es ist dabei zu berücksichtigen, dass sich bei den Hydrolysereaktionen der Ausgangsmaterialien wie den Alkoholaten Lösungsmittel in situ bilden kann. Das Reaktionsgemisch ist daher beim Fortschritt der Hydrolyse in der Regel nicht lösungsmittelfrei, aber wesentlich weniger verdünnt als es sonst nach dem Stand der Technik üblich ist. Nach Vervollständigung der Reaktion, z.B. nach der obigen Reifung kann Lösungsmittel zugegeben werden, z.B. zur Einstellung der Viskosität.

Bei einem zwei- oder mehrstufigen Verfahren kann die vorgesehene Menge an Wasser vollständig im ersten Schritt zugegeben werden. In einer Ausführungsform kann von der vorgesehenen Menge ein Teil erst nach der Zugabe der Metall-, Phosphor- oder Borverbindung zugegeben werden. In diesem Fall können nicht 100% der vorgesehenen Wassermenge wie vorstehend beschrieben im ersten Schritt zur Hydrolyse verwendet werden, sondern z.B. 90 bis 20% und bevorzugt 70 bis 30% der vorgesehenen Wassermenge wie vorstehend beschrieben. Der Rest der vorgesehenen Menge wird dann z.B. direkt nach der Zugabe der hydrolysierbaren Metall-, Phosphor- oder Borverbindung oder bevorzugt nach einer Reifung zugegeben. In einer anderen Ausführungsform können 100% der vorgesehenen Wassermenge wie vorstehend beschrieben im ersten Schritt zur Hydrolyse verwendet werden und eine zusätzliche Menge Wasser kann nach der Zugabe der Metall-, Phosphor- oder Borverbindung zugegeben werden. Zweckmäßige Mengen für das zusätzliche Wasser entsprechen dann den vorstehend angegebenen Mengen für den ersten Schritt. Es kann auch mehr Wasser zugegeben werden, vor allem nach erfolgter Reifung.

Das Heterokondensat umfasst dementsprechend ein Metallo-, Phosphoro- oder Borosiloxan, das Heteroatomeinheiten von Heteroatomen ausgewählt aus P, B, AI, Ge, Sn, Pb, Ti, Mg, Li, V, Nb, Ta, Zr und Hf, die über Sauerstoffbrücken in das Siloxangerüst eingebaut sind, und Siloxaneinheiten, bei denen das Siliciumatom eine nicht hydrolysierbare organische Gruppe aufweist, enthält. Das Heteroatom ist je nach Wertigkeit über 2, 3 oder 4 Sauerstoffbrücken in das Siloxangerüst eingebaut. Bevorzugt werden als Heteroatome B, AI, Sn, Ti oder Zr eingesetzt, so dass Boro-, Alumino-, Stanno-, Titano- oder Zirconosiloxane gebildet werden, wobei Titanosiloxane besonders bevorzugt sind.

Das Bindemittel umfasst ferner eine rein organische Komponente B), so dass eine zusätzliche organische Matrix aufgebaut werden kann. Die organische Komponente aus den nachstehend definierten Monomeren oder Oligomeren ist bevorzugt löslich. Durch den Einsatz der organischen Komponente werden weiter verbesserte mechanische Festigkeit und Flexibilität erzielt. Es ergeben sich nach dem Härten zwei sich durchdringende Polymere, nämlich das Heterokondensat und ein rein organisches Polymer, so dass sich IPN-Polymere (IPN = Interpenetrierende Netzwerke, siehe z.B. Römpp Chemie Lexikon, 9. Auflage, S. 2007) bilden. Die sich durchdringenden Polymere können rein physikalisch gemischt sein.

Für die organische Bindemittelkomponente B) werden ein oder mehrere organische polymerisierbare oder polykondensierbare Monomere oder Oligomere verwendet. Diese können eine oder mehrere polymerisierbare Gruppen aufweisen, wobei radikalisch polymerisierbare Gruppen bevorzugt sind. Bevorzugt sind thermisch polymerisierbare Gruppen. Es kann auch ein Gemisch aus zwei oder mehr Monomeren oder Oligomeren verwendet werden. Die polymerisierbaren Gruppen sind ausgewählt aus Epoxid, Hydroxy, Amino, Monoalkylamino, Dialkylamino, gegebenenfalls substituiertes Anilino, Amid, Carboxy, Alkenyl, Alkinyl, Acryloyl, Acryloyloxy, Methacryloyl, Methacryloyloxy, Mercapto, Cyano, Isocyanato, und Säureanhydrid, bevorzugt sind C=C-Doppelbindungen, insbesondere Acryl- und Methacrylgruppen, Hydroxy-, Amino-, Carboxyl-, Säureanhydridgruppen, Epoxid- und/oder Isocyanatgruppen.

Das organische Monomer oder Oligomer umfasst eine und bevorzugt mindestens zwei polymerisierbare oder polykondensierbare Gruppen. Die polymerisierbaren Gruppen dienen allgemein zur Polymerisation oder Verknüpfung der organischen Komponente, wobei es sich um eine polymerisierbare bzw. polykondensierbare Gruppe oder um korrespondierende polymerisierbare bzw. polykondensierbare Gruppen handeln kann.

Organische Monomere oder Oligomere als Bindemittelkomponente sind dem Fachmann bestens vertraut und er kann sie ohne weiteres in geeigneter Weise je nach Bedarf auswählen. Bei der eingesetzten organischen Komponente kann es sich um definierte Einzelverbindungen oder Gemische von Verbindungen mit unterschiedlichem Polymerisationsgrad handeln.

Es können Monomere oder Oligomere eingesetzt werden, die bei Polymerisation z. B. Polyisocyanate, Melaminharze, Polyester oder Epoxidharze ergeben. Mono-, bi- oder polyfunktionelle Acrylate und Methacrylate werden bevorzugt als Monomere oder Oligomere eingesetzt. Konkrete Beispiele für das organische Monomer oder Oligomer sind Diethylenglycoldimethacrylat (DEGDMA), Triethylenglycoldimethacrylat (TEGDMA), Bisphenol A-glycidylmethacrylat (BisGMA), Bisphenol A-diacrylat, Acrylsäurebutylester (AB), Diurethandimethacrylat, Urethandimethacrylat (UDMA), Styrol, Styrolderivate, Vinylpyridin, Vinylbenzolsulfonsäure, Laromer®-Acrylate der BASF, Ebecryl®, Pentaerythrittriacrylat (PETIA), Hexandioldiacrylat, Trimethylolpropantriacrylat, Trimethylolpropantrimethacrylat, Neopentylglycoldimethacrylat, Neopentylglycoldiacrylat, Epoxyacrylatharze, oligomere Methacrylate, wie LR 8862, LR 8907 von BASF, oder oligomere Urethanacrylate, wie UA 19T von BASF, sowie Oligomere der genannten Monomere.

Die organische Komponente (Monomere und/oder Oligomere) wird bevorzugt nach Herstellung des Heterokondensats zugegeben, sie kann aber auch vorher zugegeben werden. In diesem Fall wird die Bindemittelkomponente zu einer Vorstufe des Heterokondensats gegeben, also z.B. zu den hydrolysierbaren oder den hydrolysierten Siliciumverbindungen oder zur Metall-, Phosphor- oder Borverbindung.

Das erfindungsgemäße Bindemittel umfasst als dritte Komponente C) mindestens eine hydrolysierbare Siliciumverbindung, die einen nicht hydrolysierbaren organischen Rest mit mindestens einer hydrophilen Gruppe umfasst, ausgewählt aus einem Silan der allgemeinen Formel (IIIa)

R'ₙSiX₄₋ₙ (IIIa)

worin die Reste R' gleich oder verschieden sind und hydrolytisch nicht abspaltbare Gruppen darstellen, wobei mindestens ein Rest R' mindestens eine hydrophile Gruppe als Substituenten aufweist, die Reste X gleich oder verschieden sind und hydrolytisch abspaltbare Gruppen oder Hydroxygruppen darstellen und n den Wert 1, 2 oder 3, vorzugsweise 1, hat.

Die Gruppe X ist wie in der Formel (III) definiert, wobei die bevorzugten Gruppen auch hier bevorzugt sind. Der mindestens eine hydrolytisch nicht abspaltbare Rest R' mit mindestens einer hydrophilen Gruppe umfasst eine zweiwertige Brückengruppe über die die hydrophile Gruppe mit dem Siliciumatom verbunden ist. Neben dem Rest R' mit einer hydrophilen Gruppe kann das Silan der Formel (IIIa) ein oder zwei weitere nicht hydrolysierbare Reste R' ohne hydrophile Gruppe aufweisen. Die Gruppen R' ohne hydrophile Gruppen entsprechen der anderen Gruppe R in der obigen allgemeinen Formel (III). Bevorzugt umfasst das Silan der Formel (IIIa) nur eine Gruppe R' (n=1), wobei diese Gruppe R' eine hydrophile Gruppe aufweist.

Die hydrophile Gruppe des hydrolysierbaren Silans ist ausgewählt aus einer Glycidyloxy-, Amino-, Polyethylenglycol-, Polyethylenamin-, Carbaldehyd-, Epoxy-, Hydroxy-, Carboxy-, Mercapto-, Säureanhydrid-, Sulfonato- und Phosponatogruppe, wobei die Glycidyloxygruppe und Aminogruppe besonders bevorzugt sind. Bei Silanen mit Epoxygruppe wie Glycidyloxypropyltrialkoxysilan können sich die Epoxygruppen unter Anwendungsbedingungen zu Diolgruppen öffnen. Polyethylenglycol- und Polyethylenamingruppen als hydrophile Gruppen können z.B. durch Umsetzung von Glycidyloxypropyltrialkoxysilan mit Polyethylenglycol (PEG) bzw. Polyethylenamin erhalten werden. Solche Verbindungen sind auch im Handel erhältlich.

Die hydrophile Gruppe ist über zweiwertige Brückengruppen, insbesondere Alkylen- oder Arylen-Brückengruppen, die durch Sauerstoff- oder -NH-Gruppen unterbrochen sein können, an das Siliciumatom gebunden. Die Brückengruppen enthalten z. B. 1 bis 8, bevorzugt 1 bis 6 Kohlenstoffatome. Die genannten zweiwertigen Brückengruppen leiten sich z. B. von den oben genannten einwertigen Alkyl- oder Arylresten für den Substituenten R in der allgemeinen Formel (III) ab. Bevorzugt ist die Brückengruppe eine Alkylen-, insbesondere eine Propylengruppe. Bevorzugte Substituenten mit hydrophiler Gruppe sind Glycidyloxy-(C₁₋₈)-alkylen, wie Glycidyloxypropyl, 2-(3,4-Epoxycyclohexyl)ethyl, Amino-(C₁₋₈)-alkylen und Hydroxy-(C₁₋₈)-alkylen. Besonders bevorzugte Reste sind Glycidyloxypropyl und Aminopropyl.

Beispiele für eine besonders bevorzugt eingesetzte hydrolysierbare Siliciumverbindungen, die einen nicht hydrolysierbaren organischen Rest mit mindestens einer hydrophilen Gruppe umfasst, sind Glycidyloxypropyltrialkoxysilane und Aminopropyltrialkoxysilane, einschließlich Mono-, Di- und Triaminopropyltrialkoxysilane. Konkrete Beispiele für die hydrolysierbare Siliciumverbindung sind Glycidyloxypropyltrimethoxysilan (GPTS), γ-Glycidyloxypropyltriethoxysilan (GPTES), 3-Aminopropyltrimethoxysilan (APTS), 3-Aminopropyltriethoxysilan (APTES), Hydroxymethyltrialkoxysilan, wie 3-Hydroxypropyltrimethoxysilan, 3-Hydroxypropyltriethoxysilan, N-Hydroxyethylaminopropyltrialkoxysilan, 2-Methoxy(polyethylenoxy)propyltrialkoxysilan [CAS Nr. 65994-07-2], N-Trimethoxysilylpropyl-NNN-trimethylammoniumchlorid [CAS Nr. 35141-36-7], [3-(Triethoxysilyl)propyl]bernsteinsäureanhydrid, (Dihydro-3-(3-tri-ethoxysilyl)propyl)-2,5-furandion, und [3-(Trimethoxysilyl)propyl]bernsteinsäureanhydrid oder Reaktionsprodukte von Glycidyloxypropyltrialkoxysilan und Polyethylenglycol (PEG) oder Reaktionsprodukte von Glycidyloxypropyltrialkoxysilan und Polyethylenamin. Bei der Alkoxygruppe aller vorstehend genannten Verbindungen kann es sich um jede übliche handeln, am üblichsten sind Methoxy- oder Ethoxygruppen. Die Verbindungen sind im Handel erhältlich und/oder können nach dem Fachmann bekannten Verfahren hergestellt werden.

Das erfindungsgemäße Bindemittel umfasst eine Mischung der drei vorstehend diskutierten Komponenten A), B) und C). Die Reihenfolge der Zugabe der einzelnen Komponenten ist beliebig. Es kann z.B. zuerst das organische Monomer oder Oligomer (Komponente B) mit der hydrolysierbaren Siliciumverbindung, die eine nicht hydrolysierbare Gruppe mit mindestens einer hydrophilen Gruppe umfasst (Komponente C) vermischt werden und anschließend das Heterokondensat zugesetzt werden. Eine andere Variante ist das Vermischen des Heterokondensats mit der hydrolysierbaren Siliciumverbindung, die eine nicht hydrolysierbare Gruppe mit mindestens einer hydrophilen Gruppe umfasst, und anschließender Zugabe des organischen Monomers oder Oligomers.

In einer bevorzugten Ausführungsform wird die Mischung des erfindungsgemäßen Bindemittels durch Zugabe der mindestens einen hydrolysierbaren Siliciumverbindung, die eine nicht hydrolysierbare Gruppe mit mindestens einer hydrophilen Gruppe umfasst, zu einer Mischung aus dem Heterokondensat und dem mindestens einen organischen Monomer oder Oligomer erhalten.

Wenn das hydrolysierbare Silan mit hydrophiler Gruppe (Komponente C) mit den an sich mit Wasser nicht mischbaren Komponenten A und B vermischt wird, bildet sich eine trübe Emulsion und eine klebrige Phase scheidet sich ab. Diese klebrige Phase haftet besonders gut an den Oberflächen der häufig silicatischen Formationen. Die Natur dieser klebrigen Phase ist unbekannt, möglicherweise spielen aber Reaktionen mit in dem Heterokondensat noch enthaltenem Wasser und gegebenenfalls mit dem Heterokondensat selbst eine Rolle. Es wird vermutet, dass diese klebrige Phase zu der überraschend guten Festigkeit beiträgt, die trotz des vorherigen Brine-Flushing im Wesentlichen erhalten bleibt.

Das Verhältnis der erfindungsgemäß eingesetzten Komponente A, d.h. ein Heterokondensat, erhältlich durch Hydrolyse und Kondensation von mindestens einer hydrolysierbaren Siliciumverbindung und mindestens einer Metall-, Phosphor- oder Borverbindung, wobei das Metall ausgewählt ist aus AI, Ge, Sn, Pb, Ti, Mg, Li, V, Nb, Ta, Zr und Hf, Komponente B, d.h. mindestens ein organisches polymerisierbares oder polykondensierbares Monomer oder Oligomer, und Komponente C, d.h. mindestens eine hydrolysierbare Siliciumverbindung, die einen nicht hydrolysierbaren Rest mit mindestens einer hydrophilen Gruppe umfasst, kann in breiten Bereichen variiert werden. Das Verhältnis von A/B/C bezogen auf das Gewicht beträgt z.B. geeigneterweise 5-94,5% / 5-94,5% / 0,5-10%, bevorzugt 29-70% / 29-70% / 1-5% und besonders bevorzugt 39-60% / 39-60% / 1-2%.

Als zusätzliche Komponente kann das Bindemittel Polysiloxane, wie z.B. Poly-(alkoxysilane) oder Polyalkylsiloxane oder entsprechende Polyarylsiloxane und Copolymere davon, umfassen. Es können Polysiloxane eingesetzt werden, die keine reaktiven Gruppen tragen. Bevorzugt werden aber Polysiloxane eingesetzt, die mindestens eine reaktive Gruppe, insbesondere eine reaktive Endgruppe, aufweisen. Man kann dadurch IPN-Polymere mit kovalenten Bindungen zwischen den sich durchdringenden Polymeren erhalten. Es können aber auch IPN-Polymere gebildet werden, die rein physikalisch gemischt sind.

Es gibt eine große Vielfalt an Poly(alkoxysilanen), Polyalkylsiloxanen und Polyarylsilanen und Copolymeren davon mit reaktiven Endgruppen. Insbesondere sind solche Polysiloxane, insbesondere Polyalkylsiloxane, mit reaktiven Gruppen bzw. Endgruppen kommerziell erhältlich, z.B. von Gelest, Inc., Philadelphia. Beispiele für die reaktive Gruppe oder Endgruppe sind Vinyl, Hydrid, Silanol, Alkoxy, Amine, Epoxy, Carbinol, Methacrylat/Acrylat, Mercapto, Acetoxy, Chlorid und Dimethylamin. Über die reaktiven Gruppen bzw. Endgruppen können die Polysiloxane in das anorganische Netzwerk und gegebenenfalls in die organische Matrix eingebunden bzw. vernetzt werden. Wenn z.B. Polysiloxane mit Silanol-Endgruppen eingesetzt werden, wird die Silanol-Gruppe mit Hydroxygruppen der hydrolysierten Silane oder der Metall- oder Borverbindungen reagieren. Dadurch wird die Elastizität bzw. Druckfestigkeit des Formkörpers überraschenderweise noch weiter erhöht.

Die Polysiloxane können verzweigt oder bevorzugt linear sein. Die reaktive Gruppe kann an der Hauptkette oder einer Seitenkette vorliegen, ist aber bevorzugt eine Endgruppe. Es können natürlich mehr als eine reaktive Gruppe vorhanden sein, z.B. 2 oder mehr reaktive Gruppen. Ein lineares Polysiloxan enthält z.B. bevorzugt 2 reaktive Endgruppen. Als Polysiloxane mit reaktiven Gruppen oder Endgruppen werden Polysiloxane mit Silanol- und Alkoxy-Gruppen bevorzugt eingesetzt, insbesondere Polysiloxane mit Silanol-Endgruppen.

Beispiele für Poly(alkoxysilane), Polyalkyl- bzw. Polyarylsiloxane und Copolymere davon sind Polydimethylsiloxane, Polydiethylsiloxane, Polymethylethylsiloxane, Polydiphenylsiloxane und entsprechende Copolymere, die jeweils mindestens eine reaktive Gruppe enthalten. Spezielle Beispiele sind Polydimethylsiloxane mit Silanol-Endgruppen oder mit Alkoxy-Endgruppen, Poly(diethoxysiloxane) und Polydimethoxysiloxane.

Das Molekulargewicht der verwendeten Polysiloxane kann je nach Anwendungsbereich aus einem großen Bereich ausgewählt werden, beispielsweise im Bereich von 100 bis 10.000 g/mol. Bevorzugt sind Polysiloxane mit einem Molekulargewicht von 100 bis 3500 g/mol und bevorzugter 300 bis 3000 g/mol, z.B. 400 bis 2000 g/mol. Es können auch höhermolekulare Polysiloxane eingesetzt werden, z.B. mit einem Molekulargewicht bis zu 50000 g/mol oder mehr. Unter dem Molekulargewicht wird hier das Zahlenmittel des Molekulargewichts verstanden.

Es können nichtreaktive Oligomere oder Polymere als zusätzliche organische Komponente zugegeben werden. Diese nichtreaktiven Oligomere und Polymere besitzen keine polymerisierbaren oder polykondensierbaren Gruppen und unterliegen demzufolge keiner Polymerisation und damit auch keinem Polymerisationsschrumpf.

Das Gewichtsverhältnis aller eingesetzten anorganischen Komponenten, einschließlich der darin enthaltenen organischen Gruppen, zu den eingesetzten rein organischen Komponenten kann in breiten Bereichen gewählt werden und beträgt, bezogen auf das gehärtete Bindemittel, z.B. 95:5 bis 5:95 und bevorzugt 80:20 bis 20:80.

Das Bindemittel kann als weitere Komponente einen Puffer umfassen. Durch den Puffer kann der pH-Wert des Bindemittels auf einen gewünschten Wert eingestellt werden, zum anderen wird das Bindemittel stabilisiert, d.h. bei Verdünnungen des Bindemittels oder bei Säure- oder Basenzugaben zum Bindemittel in nicht zu großen Mengen ändert sich der pH-Wert des Bindemittels kaum. Durch die Zugabe des Puffers kann der pH-Wert des Bindemittels auf einen Wert im Bereich von 2 bis 7, bevorzugt 4 bis 6, bevorzugter 4,5 bis 6 oder 4 bis 5 eingestellt werden.

Puffer auf Basis einer schwachen Säure und der konjugierten Base sind bevorzugt. Es kann sich auch um polymere Puffer oder um Mischungen verschiedener Säuren und/oder Basen handeln. Dem Fachmann sind solche Puffer und deren nutzbarer Pufferbereich bekannt. Für das erfindungsgemäße Bindemittel können alle üblichen, für diesen pH-Bereich geeigneten Puffersysteme verwendet werden und der Fachmann kann sie ohne weiteres auswählen.

Der Puffer kann mit einem organischen Lösungsmittel, bevorzugt Alkohol, wie Methanol oder Ethanol, gebildet werden. Bei Puffern auf Basis organischer Säuren kann das Salz der organischen Säure z.B. 1 bis 20 Gew.-% des Puffers ausmachen. Puffer sind im Handel erhältlich oder können vom Fachmann ohne weiteres hergestellt werden.

Beispiele für geeignete Puffer sind (in Klammern ist der wirksame Pufferbereich angegeben): Essigsäure/Acetat-Puffer (pH = 3,7-5,7), Citronensäure/Trinatriumcitrat-Puffer (pH = 2,2-8), Weinsäure/Tartrat-Puffer, 2-(4-(2-Hydroxyethyl)-1-piperazinyl)ethansulfonsäure (pH = 6,8-8,2) und 2-(N-Morpholino)ethansulfonsäure (pH = 5-7). Puffer mit organischen Säuren sind besonders bevorzugt. Besonders bevorzugt ist ein Essigsäure/Acetat-Puffer, mit dem der pH-Wert auf etwa 4,75 eingestellt werden kann. Puffer auf Carbonsäurebasis sind bevorzugt, da sie neben der Pufferwirkung auch die offene Zeit bzw. Gelierzeit verlängern können.

Ein solches Puffersystem umfasst bevorzugt einen Komplexbildner. Durch den Komplexbildner können "Spitzen", z.B. von Oxidkomponenten, die Metallkomponenten wie z.B. AI, Ti oder Zr enthalten, "deaktiviert" werden. Der Komplexbildner kann z.B. eine organische Säure oder ein Chelatbildner sein. Der Komplexbildner eignet sich bevorzugt zur Komplexierung von höherwertigen Ionen bzw. Metallionen, wie z.B. Al-, Ti- oder Zr-Ionen. Diese sind dem Fachmann bekannt.

Beispiele für Komplexbildner bzw. Chelatbildner sind α- und β-Hydroxycarbonylverbindungen, wie Hydroxycarbonsäuren, -ketone oder -aldehyde und ihre Analoga wie β-Diketone, wie Acetylaceton und Ethylacetoacetat, Polyoxycarbonsäuren, Polyamine, wie Ethylendiamin, Aminoalkohole wie Triethanolamin, Dialkyldithiophosphat, Dodecylbenzolsulfonsäure, EDTA und Nitrilotriessigsäure, wobei β-Diketone besonders bevorzugt sind. Beispiele für organische Säuren sind Essigsäure, Citronensäure, Weinsäure, Ölsäure und Palmitinsäure. Der Komplexbildner wird bevorzugt so gewählt, dass er beim eingestellten pH-Wert eine komplexbildende Wirkung auf die im Bindemittel enthaltenen Metallkationen, wie z.B. Al³⁺, Zr⁴⁺ oder Ti⁴⁺, bzw. den daraus abgeleiteten Oxiden besitzt.

Zum Bindemittel wird bevorzugt ein ionischer oder radikalischer Starter bzw. Initiator für die Polymerisation zugegeben, vorzugsweise ein thermischer Initiator, wobei ein radikalischer Initiator bevorzugt ist. Der Inititiator startet die Polymerisation, wodurch das Bindemittel gehärtet bzw. vernetzt wird. Diese Katalysatoren sind dem Fachmann bekannt und er kann die geeigneten unter Berücksichtigung der verwendeten Komponenten ohne weiteres auswählen. Beispiele für radikalische Thermostarter sind organische Peroxide, z.B. Diacylperoxide, Peroxydicarbonate, Alkylperester, Alkylperoxide, Perketale, Ketonperoxide und Alkylhydroperoxide, und Azoverbindungen. Konkrete Beispiele sind Dibenzoylperoxid, Trigonox® 121, tert-Butylperbenzoat, Amylperoxy-2-ethylhexanoat und Azobisisobutyronitril. Der Initiator kann in den üblichen, dem Fachmann bekannten Mengen eingesetzt werden, z.B. 0,01 bis 5 Gew.-%, bezogen auf den Gesamtfeststoffgehalt des Bindemittels. Besonders bevorzugt werden Peroxide als Polymerisationsinitiatoren eingesetzt.

Beispiele für Lösungsmittel, die dem Bindemittel zugegeben werden können, sind Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₄-Alkoholen, Amide, wie Dimethylformamid, Tetrahydrofuran, Dioxan, Sulfoxide, Sulfone oder Butylglycol und deren Gemische. Bevorzugt werden Alkohole verwendet. Es können auch hochsiedende Lösungsmittel eingesetzt werden; z. B. Polyether wie Triethylenglycol, Diethylenglycoldiethylether und Tetraethylenglycoldimethylether.

Andere herkömmliche Additive, die dem Bindemittel gegebenenfalls zugegeben werden können, sind z. B. Farbstoffe, Pigmente, Viskositätsregulatoren und Tenside. Für die Herstellung von Emulsionen des Bindemittels können z.B. die bei Siliconemulsionen üblichen stabilisierenden Emulgatoren wie z.B. Tween® 80 und Brij® 30 herangezogen werden.

Das erhaltene erfindungsgemäße Bindemittel liegt vorzugsweise partikelfrei als Lösung oder Emulsion vor, es ist bevorzugt frei von kristallinen Produkten oder Partikeln, dies kann z.B. durch Photokorrelationsspektroskopie (PCS) nachgewiesen werden.

Es folgen Beispiele zur Erläuterung der Erfindung, die diese aber in keiner Weise einschränken sollen.

### Beispiel 1

11,33g Methacryloyloxypropyltrimethoxysilan (MPTS, 45,6 mmol) und 5,65g Polydimethylsiloxan mit Hydroxyendgruppen (MG 400-700g/mol) wurden gemischt und unter dem Rühren mit einem Gemisch aus 0,122g 37% HCl und 1,18g Wasser (66,6 mmol) versetzt. 10,04g Tetraisopropyltitanat (TPT, 35,3 mmol) wurden 1 Minute nach der Zugabe von HCl und Wasser in das Sol mit einem Schuss zugefügt und es wurde für 2 Stunden weitergerührt. Danach wurden 1,53g Wasser (85 mmol) zugetropft und über Nacht gerührt um ein Hydrolysat bzw. Kondensat zu erhalten.

Das Hydrolysat bzw. Kondensat (ca. 29,9g) wurde mit 30g Hexandioldimethacrylat versetzt und vermengt. Anschließend erfolgte die Zugabe von 1,2g Aminopropyltriethoxysilan. Dem Bindemittel wurden 12g Butylglykol und 1,8g Trigonox® 121 als Radikalstarter zugesetzt.

Zur Herstellung eines Formkörpers wurde Sand in einer Form (Länge 3cm, Durchmesser 2cm) mit dem erhaltenen Bindemittel gefüllt. Überschüssiges Bindemittel wurde durch Salzwasser ausgetrieben. Der Sandformkörper wurde bei einer Temperatur von 50°C gehärtet. Anschließend wurde de Verfestigung überprüft.

### Beispiel 2

Das Bindemittel von Beispiel 2 wurde auf die gleiche Weise wie in Beispiel 1 hergestellt, außer dass 2,4g Glycidyloylpropyltriethoxysilan anstelle von 1,2g Aminopropyltriethoxysilan und 12g Isopropanol anstelle von 12g Butylglykol verwendet wurden.

Zur Herstellung eines Formkörpers wurde Sand in einer Form (Länge 3cm, Durchmesser 2cm) mit dem erhaltenen Bindemittel gefüllt. Überschüssiges Bindemittel wurde durch Salzwasser ausgetrieben. Der Sandformkörper wurde bei einer Temperatur von 50°C gehärtet. Anschließend wurde de Verfestigung überprüft.

### Vergleichsbeispiel

Das Bindemittel des Vergleichsbeispiels wurde auf die gleiche Weise wie in Beispiel 1 hergestellt, außer dass weder Aminopropyltriethoxysilan noch Glycidyloylpropyltriethoxysilan zugegeben wurde.

Zur Herstellung eines Formkörpers wurde Sand in einer Form (Länge 3cm, Durchmesser 2cm) mit dem erhaltenen Bindemittel gefüllt. Überschüssiges Bindemittel wurde durch Salzwasser ausgetrieben. Der Sandformkörper wurde bei einer Temperatur von 50 °C gehärtet. Anschließend wurde die Verfestigung überprüft.

### Ergebnis

Mit den Bindemitteln aus den Beispielen 1 und 2 konnte eine vollständige Verfestigung des Formkörpers erreicht werden. Dagegen konnte der Formkörper mit dem Bindemittel des Vergleichsbeispiels nicht verfestigt werden.

## Patentansprüche

1. Bindemittel zur Verfestigung von geologischen Formationen, umfassend eine Mischung aus
A) einem Heterokondensat, erhältlich durch Hydrolyse und Kondensation von mindestens einer hydrolysierbaren Siliciumverbindung ausgewählt aus Siliciumverbindungen der allgemeinen Formel (III)
RₙSiX₄₋ₙ (III)
worin die Reste X gleich oder verschieden sind und Hydroxygruppen, Wasserstoff, Halogen, Alkoxy, Isocyanato, Aryloxy, Alkaryloxy, Acyloxy, Alkylcarbonyl, NH₂, mit Alkyl, Aryl und/oder Aralkyl mono- oder disubstituiertes Amino, Amido, Aldoxim- oder Ketoximgruppen sind, wobei zwei oder drei Gruppen X auch miteinander verbunden sein können, um Si-Polyolkomplexe mit Glycol, Glycerin oder Brenzcatechin zu bilden, wobei die genannten Gruppen gegebenenfalls Substituenten ausgewählt aus Halogen, Hydroxy oder Alkoxy enthalten können und n den Wert 1, 2 oder 3 hat, wobei mindestens ein Rest R eine polymerisierbare Gruppe ausgewählt aus Epoxid, Hydroxy, Amino, Monoalkylamino, Dialkylamino, gegebenenfalls substituiertem Anilino, Amid, Carboxy, Alkenyl, Alkinyl, Acryloyl, Acryloyloxy, Methacryloyl, Methacryloyloxy, Mercapto, Cyano, Isocyanato, Aldehyd, Keton, Alkylcarbonyl, Säureanhydrid oder Phosphorsäure aufweist, die über eine zweiwertige Brückengruppe an das Siliciumatom gebunden ist, und, falls vorhanden, die anderen Reste R gleich oder verschieden sind und ausgewählt sind aus Alkyl, Aryl, Aralkyl, Alkaryl oder cyclischem C₃-C₁₂-Alkyl,
und mindestens einer Metall-, Phosphor- oder Borverbindung, wobei das Metall ausgewählt ist aus Al, Ge, Sn, Pb, Ti, Mg, Li, V, Nb, Ta, Zr und Hf,
B) mindestens einem organischen polymerisierbaren oder polykondensierbaren Monomer oder Oligomer mit einer oder mehreren polymerisierbaren Gruppen ausgewählt aus Epoxid, Hydroxy, Amino, Monoalkylamino, Dialkylamino, gegebenenfalls substituiertem Anilino, Amid, Carboxy, Alkenyl, Alkinyl, Acryloyl, Acryloyloxy, Methacryloyl, Methacryloyloxy, Mercapto, Cyano, Isocyanato oder Säureanhydrid, und
C) mindestens einer hydrolysierbaren Siliciumverbindung, die einen nicht hydrolysierbaren Rest mit mindestens einer hydrophilen Gruppe umfasst, ausgewählt aus einer Siliciumverbindung der allgemeinen Formel (IIIa)
R'ₙSiX₄₋ₙ (IIIa)
worin die Reste R' gleich oder verschieden sind und hydrolytisch nicht abspaltbare Gruppen darstellen, wobei mindestens ein Rest R' mindestens eine hydrophile Gruppe als Substituenten aufweist, die Reste X gleich oder verschieden sind und wie vorstehend für die allgemeine Formel (III) definiert sind und n den Wert 1, 2 oder 3 hat,
wobei der mindestens eine hydrolytisch nicht abspaltbare Rest R' mit mindestens einer hydrophilen Gruppe eine zweiwertige Brückengruppe umfasst, über die die hydrophile Gruppe mit dem Siliciumatom verbunden ist, wobei die hydrophile Gruppe ausgewählt ist aus einer Glycidyloxy-, Amino-, Polyethylenglycol-, Poly-ethylen-amin-, Carbaldehyd-, Epoxy-, Hydroxy-, Carboxy-, Mercapto-, Säureanhydrid-, Sulfonato- und Phosponatogruppe ist, und die Siliciumverbindung der allgemeinen Formel (IIIa) neben dem Rest R' mit einer hydrophilen Gruppe ein oder zwei weitere nicht hydrolysierbare Reste R' ohne hydrophile Gruppe ausgewählt aus Alkyl, Aryl, Aralkyl, Alkaryl oder cyclischem C₃-C₁₂-Alkyl aufweisen kann.

2. Bindemittel nach Anspruch 1, das durch Zugabe der mindestens einen hydrolysierbaren Siliciumverbindung, die einen nicht hydrolysierbaren Rest mit mindestens einer hydrophilen Gruppe umfasst, zu einer Mischung aus dem Heterokondensat und dem mindestens einen organischen Monomer oder Oligomer erhältlich ist.

3. Bindemittel nach irgendeinem der Ansprüche 1 bis 2, wobei es sich bei dem nicht hydrolysierbaren Rest mit mindestens einer hydrophilen Gruppe, um eine Alkylgruppe handelt, die mindestens eine hydrophile Gruppe aufweist.

4. Bindemittel nach irgendeinem der Ansprüche 1 bis 3, das einen Puffer und gegebenenfalls einen Komplexbildner umfasst, wobei der pH-Wert des gepufferten Bindemittels bevorzugt im Bereich von 2 bis 7 liegt.

5. Bindemittel nach irgendeinem der Ansprüche 1 bis 4, **dadurch gekennzeichnet, dass** das organische polymerisierbare oder polykondensierbare Monomer oder Oligomer eine radikalisch polymerisierbare Gruppe aufweist.

6. Bindemittel nach irgendeinem der Ansprüche 1 bis 5, **dadurch gekennzeichnet, dass** das Bindemittel einen thermischen Polymerisationsinitiator umfasst, der bevorzugt ein Radikalinitiator ist, wie zum Beispiel ein Peroxid oder eine Azoverbindung.

7. Bindemittel nach irgendeinem der Ansprüche 1 bis 6, das ferner mindestens ein Lösungsmittel und/oder ein Polysiloxan mit mindestens einer reaktiven Gruppe ausgewählt aus Vinyl, Hydrid, Silanol, Alkoxy, Amine, Epoxy, Carbinol, Methacrylat, Acrylat, Mercapto, Acetoxy, Chlorid oder Dimethylamin umfasst.

8. Bindemittel nach irgendeinem der Ansprüche 1 bis 7, **dadurch gekennzeichnet, dass** das Bindemittel partikelfrei ist.

9. Verfahren zur Verfestigung einer geologischen Formation, bei dem ein Bindemittel in die Formation infiltriert wird, ein Teil des infiltrierten Bindemittels durch Spülen mit einer Flüssigkeit wieder ausgetrieben wird, und das in der Formation verbleibende Bindemittel gehärtet wird, wobei das Bindemittel ein Bindemittel nach irgendeinem der Ansprüche 1 bis 8 ist.

10. Verfahren nach Anspruch 9, wobei die Flüssigkeit eine wässrige salzhaltige Flüssigkeit ist.

11. Verfahren nach Anspruch 9 oder Anspruch 10, wobei durch das Spülen mindestens 60 Gew.-% des infiltrierten Bindemittels wieder ausgetrieben werden.

12. Verfahren nach irgendeinem der Ansprüche 9 bis 11, wobei in der geologischen Formation oder einer darunterliegenden geologischen Formation Erdöl oder Erdgas enthalten ist.

## Claims

1. A bonding agent for solidification of geological formations including a mixture of
A) a heterocondensate, obtainable by hydrolysis and condensation of at least one hydrolysable silicon compound selected from silicon compounds of the general formula (III)
RₙSiX₄₋ₙ (III)
wherein the residues X are the same or different and represent hydroxy groups, hydrogen, halogen, alkoxy, isocyanato, aryloxy, alkaryloxy, acyloxy, alkylcarbonyl, NH₂, with alkyl, aryl and/or aralkyl mono- or disubstituted amino, amido, aldoxime, ketoxime groups, wherein two or three groups X can also be connected with each other, to form Si polyol complexes with glycol, glycerine or brenzcatechin, wherein the aforementioned groups can optionally include substituents, seleceted from halogen, hydroxyl or alkoxy, and n has the value 1, 2 or 3, wherein at least one residue R has a polymerisable group selected from epoxide, hydroxy, amino, monoalkylamino, dialkylamino, optionally substituted anilino, amide, carboxy, alkenyl, alkinyl, acryloyl, acryloyloxy, methacryloyl, methacryloyloxy, mercapto, cyano, isocyanato, aldehyde, ketone, alkylcarbonyl, acid anhydride and phosphoric acid, which is bonded to the silicon atom by way of a divalent bridging group, and, if present, the other residues R are the same or different and selected from alkyl, aryl, aralkyl, alkaryl, or cyclic C₃-C₁₂-alkyl,
and at least one metal, phosphorous or boron compound, wherein the metal is selected from Al, Ge, Sn, Pb, Ti, Mg, Li, V, Nb, Ta, Zr and Hf,
B) at least one organic polymerisable or polycondensable monomer or oligomer with one or more polymerisable groups selected from epoxide, hydroxy, amino, monoalkylamino, dialkylamino, optionally substituted anilino, amide, carboxy, alkenyl, alkinyl, acryloyl, acryloyloxy, methacryloyl, methacryloyloxy, mercapto, cyano, isocyanato, or acid anhydride, and
C) at least one hydrolysable silicon compound, which includes a non-hydrolysable residue with at least one hydrophilic group, selected from a silicon compound of the general formula (IIIa)
R'ₙSiX₄₋ₙ (IIIa)
wherein the residues R' are the same or different and represent hydrolytically non-separable groups, wherein at least one residue R' has at least one hydrophilic group as a substituent, the residues X are the same or different and are as defined above for the general formula (III), and n has the value 1, 2 or 3,
wherein the at least one hydrolytically non-separable residue R' with at least one hydrophilic group includes a divalent bridging group by means of which the hydrophilic group is connected to the silicon atom, wherein the hydrophilic group is selected from a glycidyloxy, amino, polyethylene glycol, polyethylene amine, carbaldehyde, epoxy, hydroxyl, carboxy, mercapto, acid anhydride, sulphonato and phosphonato group, and the silicon compound of the general formula (IIIa) in addition to the residue R' with a hydrophilic group can comprise one or two further non-hydrolysable residues R' without a hydrophilic group selected from alkyl, aryl, aralkyl, alkaryl, or cyclic C₃-C₁₂-alkyl.

2. The bonding agent according to claim 1 which is obtained by the addition of the at least one hydrolysable silicon compound, which includes a non-hydrolysable residue with at least one hydrophilic group, to a mixture of the heterocondensate and the at least one organic monomer or oligomer.

3. The bonding agent according to claim 1 to 2, wherein the non-hydrolysable residue with at least one hydrophilic group is an alkyl group, which has at least one hydrophilic group.

4. The bonding agent according to one of claims 1 to 3, which includes a buffer and optionally a complexing agent, wherein the pH of the buffered bonding agent is preferably in the range of 2 to 7.

5. The bonding agent according to one of claims 1 to 4, **characterized in that** the organic polymerisable or polycondensable monomer or oligomer has a radically polymerisable group.

6. The bonding agent according to one of claims 1 to 5, **characterised in that** the bonding agent includes a thermal polymerisation initiator, which is preferably a radical initiator, such as a peroxide or an azo compound.

7. The bonding agent according to one of claims 1 to 6, which further includes at least one solvent and/or a polysiloxane with at least one reactive group selected from vinyl, hydride, silanol, alkoxy, amine, epoxy, carbinol, methacrylate, acrylate, mercapto, acetoxy, chloride or dimethylamine.

8. The bonding agent according to one of claims 1 to 7, **characterised in that** the bonding agent is free of particles.

9. A method of solidification of a geological formation, in which a bonding agent is infiltrated into the formation, a proportion of the infiltrated bonding agent is expelled by flushing with a liquid and the bonding agent remaining in the formation is cured, wherein the bonding agent is a bonding agent according to one of claims 1 to 8.

10. The method according to claim 9, wherein the liquid is an aqueous, salt-containing liquid.

11. The method according to claim 9 or claim 10, wherein at least 60 wt.% of the infiltrated bonding agent is expelled by the flushing.

12. The method according to one of claims 9 to 11, wherein crude oil or natural gas is contained in the geological formation or a geological formation situated beneath it.

## Revendications

1. Liant de solidification de formations géologiques, comprenant un mélange composé
A) d'un hétérocondensé pouvant être obtenu par hydrolyse et condensation d'au moins un composé de silicium hydrolysable choisi parmi des composés de silicium de la formule générale (III)
RₙSiX₄₋ₙ (III)
dans laquelle les radicaux X sont identiques ou différents et sont des groupes hydroxy, un hydrogène, un halogène, un alcoxy, un isocyanato, un aryloxy, un alkaryloxy, un acyloxy, un alkylcarbonyle, un NH₂, des groupes amino, amido, aldoxime ou cétoxime mono- ou disubstitués avec un alkyle, un aryle et/ou un aralkyle, dans lequel deux ou trois groupes X peuvent être reliés également les uns aux autres pour former des complexes de polyol à base de Si avec du glycol, de la glycérine ou du catéchol, dans lequel les groupes mentionnés peuvent contenir éventuellement des substituants choisis parmi un halogène, un hydroxy ou un alcoxy et n a la valeur de 1, 2 ou 3, dans lequel au moins un radical R présente un groupe polymérisable choisi parmi un époxyde, un hydroxy, un amino, un monoalkylamino, un dialkylamino, éventuellement un anilino substitué, un amide, un carboxy, un alcényle, un alcynyle, un acryloyle, un acryloyloxy, un méthacryloyle, un méthacryloyloxy, un mercapto, un cyano, un isocynato, un aldéhyde, une cétone, un alkylcarbonyle, un anhydride d'acide ou l'acide phosphorique, qui est lié à l'atome de silicium par l'intermédiaire d'un groupe de pont bivalent et, si disponible, les autres radicaux R sont identiques ou différents et sont choisis parmi un alkyle, un aryle, un aralkyle, un alkaryle ou un alkyle en C₃-C₁₂ cyclique,
et au moins un composé de métal, de phosphore ou de bore, dans lequel le métal est choisi parmi Al, Ge, Sn, Pb, Ti, Mg, Li, V, Nb, Ta, Zr et Hf,
B) d'au moins un monomère ou oligomère organique polymérisable ou polycondensable avec un ou plusieurs groupes polymérisables choisis parmi un époxyde, un hydroxy, un amino, un monoalkylamino, un dialkylamino, éventuellement un anilino substitué, un amide, un carboxy, un alcényle, un alkinyle, un acryloyl, un acryloyloxy, un méthacryloyl, un méthacryloyloxy, un mercapto, un cyano, un isocynato ou un anhydride d'acide, et
C) d'au moins un composé de silicium hydrolysable, qui comprend un radical non hydrolysable avec au moins un groupe hydrophile, choisi parmi un composé de silicium de la formule générale (IIIa)
R'ₙSiX₄₋ₙ **(IIIa)**
dans laquelle les radicaux R' sont identiques ou différents et constituent des groupes non clivables de manière hydrolytique, dans lequel au moins un radical R' présente au moins un groupe hydrophile en tant que substituant, les radicaux X sont identiques ou différents et sont définis tel que ci-avant pour la formule générale (III) et n a la valeur 1, 2 ou 3,
dans lequel l'au moins un radical R' non clivable de manière hydrolytique avec au moins un groupe hydrophile comprend un groupe de pont bivalent, par l'intermédiaire duquel le groupe hydrophile est relié à l'atome de silicium, dans lequel le groupe hydrophile est choisi parmi un groupe glycidyloxy, amino, polyéthylène glycol, polyéhylène-amine, carbaldéhyde, époxy, hydroxy, carboxy, mercapto, anhydride d'acide, sulfonato et phosphonato, et le composé de silicium de la formule générale (IIIa) peut présenter outre le radical R' avec un groupe hydrophile un ou deux autres radicaux R' non hydrolysables sans groupe hydrophile choisi(s) parmi un alkyle, un aryle, un aralkyle, un alkaryle ou un alkyle en C₃-C₁₂ cyclique.

2. Liant selon la revendication 1, qui peut être obtenu par ajout de l'au moins un composé de silicium hydrolysable, qui comprend un radical non hydrolysable avec au moins un groupe hydrophile à un mélange composé de l'hétérocondensat et de l'au moins un monomère ou oligomère organique.

3. Liant selon l'une quelconque des revendications 1 à 2, dans lequel le radical non hydrolysable avec au moins un groupe hydrophile est un groupe alkyle, qui présente au moins un groupe hydrophile.

4. Liant selon l'une quelconque des revendications 1 à 3, qui comprend un tampon et éventuellement un agent complexant, dans lequel la valeur de pH du liant en mémoire tampon se situe de manière préférée dans la plage de 2 à 7.

5. Liant selon l'une quelconque des revendications 1 à 4, **caractérisé en ce que** le monomère ou l'oligomère organique polymérisable ou polycondensable présente un groupe pouvant subir une polymérisation radicalaire.

6. Liant selon l'une quelconque des revendications 1 à 5, **caractérisé en ce que** le liant comprend un initiateur de polymérisation thermique, qui est de manière préférée un initiateur radicalaire tel qu'un peroxyde ou un composé azoïque.

7. Liant selon l'une quelconque des revendications 1 à 6, qui comprend en outre au moins un solvant et/ou un polysiloxane avec au moins un groupe réactif choisi parmi un vinyle, un hydride, un silanol, un alcoxy, les amines, un époxy, un carbinol, un méthacrylate, un acrylate, un mercapto, un acétoxy, un chlorure ou la diméthylamine.

8. Liant selon l'une quelconque des revendications 1 à 7, **caractérisé en ce que** le liant est sans particule.

9. Procédé de solidification d'une formation géologique, où un liant est infiltré dans la formation, une partie du liant infiltré est à nouveau chassée par rinçage avec un liquide, et le liant subsistant dans la formation est durci, dans lequel le liant est un liant selon l'une quelconque des revendications 1 à 8.

10. Procédé selon la revendication 9, dans lequel le liquide est un liquide aqueux contenant du sel.

11. Procédé selon la revendication 9 ou la revendication 10, dans lequel au moins 60 % en poids du liant infiltré sont à nouveau chassés par le rinçage.

12. Procédé selon l'une quelconque des revendications 9 à 11, dans lequel du pétrole ou du gaz naturel est contenu dans la formation géologique ou dans une formation géologique située en dessous.
